# EUROPÄISCHE PATENTANMELDUNG

(11) **EP 1 336 538 A1**
(43) Veröffentlichungstag der Anmeldung: **20.08.2003**
(21) Anmeldenummer: 03100343.7
(22) Anmeldetag: 14.02.2003
(51) Int. Cl.: B60R 21/26

(54) **Kaltgasgenerator**

(30) Priorität: 14.02.2002 AT 962002 U
(71) Anmelder: iSi Airbag GmbH, 1210 Wien (AT)
(72) Erfinder: Schäfer, Dietmar, 1130, Wien (AT)
(74) Vertreter: KLIMENT & HENHAPEL

(57) **Zusammenfassung**

Gasdruckbehälter (1) zum Aufblasen eines Gassacks mit einer Ausströmöffnung (11), welche mittels eines über eine Auslösevorrichtung (7,8) zerstörbaren Dichtelements (5) verschlossenen ist. Um das Ausströmverhalten über weite Bereiche zu steuern, ist vorgesehen, dass vor der Ausströmöffnung (11) mindestens zwei Drosselöffnungen (13,14) mit kleinerem Durchmesser als die Ausströmöffnung (11) angeordnet sind, wobei die Durchmesser der Drosselöffnungen (13,14) mit zunehmendem Abstand von der Ausströmöffnung (11) kleiner werden.

## Beschreibung

Die vorliegende Erfindung bezieht sich auf einen Gasdruckbehälter gemäß dem Oberbegriff des Anspruchs 1.

Ein bei der Befüllung von Airbags auftretendes Problem ist die Steuerung des Ausströmverhaltens des Gases aus dem Gasdruckbehälter, welches einerseits eine schnelle und vollständige Füllung des Airbags garantieren und andererseits aber verlässlich die mechanische Zerstörung des Airbags sowie die Gefährdung des Insassen durch den beim Öffnen des mit dem Airbag in Verbindung stehenden Gasdruckbehälters vermeiden soll.

Um das Ausströmverhalten entsprechend zu steuern sind beispielsweise Auslösevorrichtungen zur Zerstörung des die Ausströmöffnung verschließenden Dichtelements vorgesehen, welche über eine Zündpille eine Treibladung zünden, die je nach Zusammensetzung durch die Erwärmung des ausströmenden Gases wiederum wesentlich zum Ausströmverhalten beiträgt.

Aus der WO 99/12775 ist bekannt, vor der Ausströmöffnung des Gasdruckbehälters eine Drossel anzuordnen, um eine mechanische Beschädigung des Airbags sicher auszuschließen indem der Druckstoß der durch die Entleerung des Gasdruckbehälters entsteht möglichst klein gehalten wird. Die Drossel ist als einfache Lochblende ausgeführt. Jenes an die Ausströmöffnung unmittelbar angrenzende Teilvolumen ist dabei sehr klein gewählt, um den ersten Druckstoß beim Öffnen zu minimieren. Erst dann strömt das im restlichen Gasdruckbehälter befindliche Gas durch die Drossel und in weiterer Folge durch die Ausströmöffnung in den Airbag. Eine darüber hinausgehende Steuerung des Ausströmverhaltens über einen längeren Zeitraum ist jedoch nicht möglich.

Aus der US 4 998 750 A ist es bekannt, einen translatorisch verschiebbaren Sockel vorzusehen, der im Auslösefall einerseits verschoben wird und andererseits an definierten Stellen zerstört wird, um den Gasfluss in den Gassack zu ermöglichen. Nachteilig dabei ist der hohe apparative Aufwand und die erforderliche Passgenauigkeit, welche erforderlich ist, um das einwandfreie Auslösen zu ermöglichen.

Ziel der vorliegenden Erfindung ist es daher, diese Nachteile zu verhindern und einen Gasdruckbehälter der eingangs erwähnten Art zu schaffen, dessen Ausströmverhalten über einen längeren Zeitraum steuerbar ist. Ein weiteres Ziel der vorliegenden Erfindung ist ein Beitrag zur Verbesserung der sogenannten OOP (out of position) Problematik. Dabei handelt es sich um die Problematik, dass ein sich nicht in optimaler Sitzposition befindlicher, zu schützender Insasse durch einen sich zu schnell entfaltenden Airbag verletzt werden kann.

Erfindungsgemäß wird dies durch die kennzeichnenden Merkmale des Anspruchs 1 erreicht.

Durch die Anordnung mehrerer Drosselöffnungen vor der Ausströmöffnung kann das Ausströmverhalten beliebig gesteuert werden, auch über einen längeren Zeitraum. Das Ausströmen des Gases kann wesentlich sanfter erfolgen. Die Zerstörung des Airbags kann wirkungsvoll verhindert werden. Durch Variation der Durchmesser der Drosselöffnungen kann das Ausströmverhalten wesentlich beeinflusst werden.

Das Merkmal der Verbindung mindestens zweier Druckräume gemäß kennzeichnendem Merkmal des Anspruchs 2 schafft die Möglichkeit, den Gasdruckbehälter beliebig zu gestalten, ohne dabei die Möglichkeit der Steuerung des Ausströmverhaltens aufzugeben.

Die kennzeichnenden Merkmale der Ansprüche 3 und 4 beschreiben eine bevorzugte Ausführungsvariante der Ausbildung der Druckräume.

Das kennzeichnende Merkmal des Anspruchs 5 beschreibt eine andere bevorzugte Ausführungsvariante der Ausbildung der Druckräume.

Die Ausführungsvariante gemäß kennzeichnendem Merkmal des Anspruchs 6 zeichnet sich doch eine besonders einfache Ausgestaltung aus.

Durch das kennzeichnende Merkmal des Anspruchs 7 kann die Ausströmöffnung alleine durch Druckunterschiede oder aber durch einen Zündmechanismus sehr einfach freigelegt werden.

Gemäß dem kennzeichnenden Merkmal des Anspruchs 8 kann die Zerstörung der Membran auch ohne Treibladung erfolgen, da eine solche zur Steuerung des Ausströmverhaltens erfindungsgemäß nicht erforderlich ist.

Im Anschluss erfolgt nun eine detaillierte Beschreibung der Erfindung anhand von Ausführungsbeispielen. Dabei zeigt
- Fig. 1: eine Schnittansicht im Schrägriss eines erfindungsgemäßen Druckbehälters mit eingehängtem Zusatzbehälter samt Zündvorrichtung
- Fig. 2: eine Schnittansicht eines erfindungsgemäßen Druckbehälters mit eingehängtem Zusatzbehälter samt Zündvorrichtung
- Fig.3: eine Schnittansicht im Schrägriss zweier erfindungsgemäß zu einem Druckbehälter verbundenen Behälter samt Zündvorrichtung
- Fig. 4: eine Schnittansicht zweier erfindungsgemäß zu einem Druckbehälter verbundenen Behälter samt Zündvorrichtung
- Fig.5: eine Schnittansicht im Schrägriss eines erfindungsgemäß durch ein Lochblende in zwei Teile geteilten Druckbehälters samt Zündvorrichtung
- Fig. 6: eine Schnittansicht eines erfindungsgemäß durch ein Lochblende in zwei Teile geteilten Druckbehälters samt Zündvorrichtung
- Fig. 7: ein Druck-Zeit Diagramm des Ausströmvorgangs

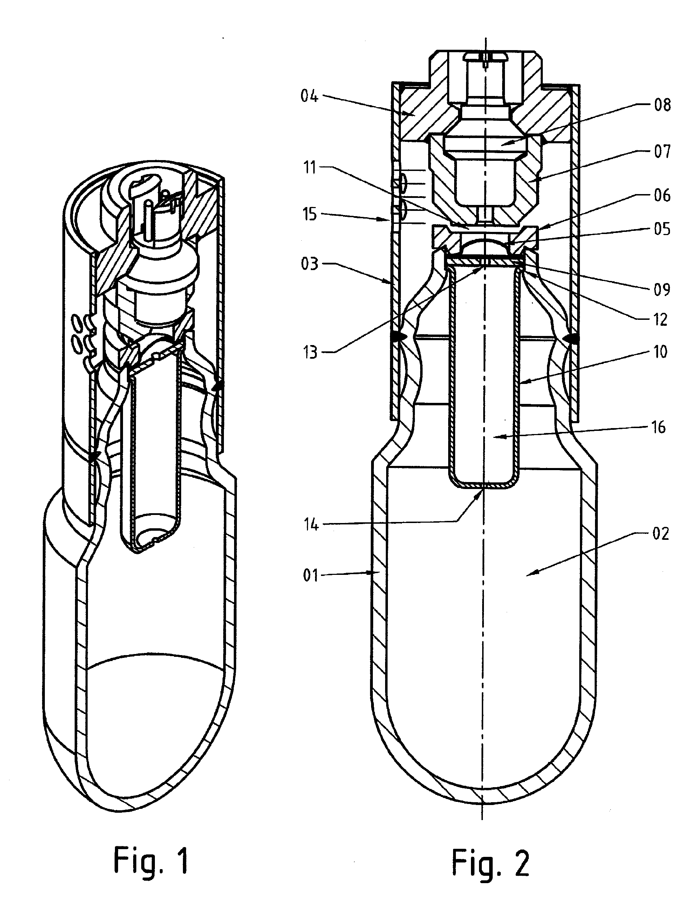

Fig.1 und 2 zeigen einen erfindungsgemäßen Gasdruckbehälter 1 samt Zündvorrichtung 7, 8 zur Befüllung eines Airbags. In der Behälteröffnung des Gasdruckbehälters 1 ist ein mit diesem verschweisster Membranträger 6 angeordnet. Der Membranträger 6 weist wiederum die eigentliche Ausströmöffnung 11 auf, welche kleiner als die Behälteröffnung ist. Die Ausströmöffnung 11 ist von einer am Membranträger 6 befestigten Membran 5 verschlossen.

Im Bereich der Behälteröffnung und an der Innenseite des Gasdruckbehälters 1 ist weiters eine Umlaufkante 12 vorgesehen, in welche ein in den Gasdruckbehälter 1 hineinragender Zusatzbehälter 10 eingehängt ist. Zwischen diesem Zusatzbehälter 10 und dem Membranträger 6 ist eine Lochblende 9 befestigt, welche eine Drosselöffnung 13 aufweist. Eine weitere, einen kleineren Durchmesser aufweisende Drosselöffnung 14 ist im Boden des Zusatzbehälters 10 angeordnet, wobei für den Fachmann klar ist, dass diese weitere Drosselöffnung 14 an einer beliebigen Stelle der Behälterwand des Zusatzbehälters 10 angeordnet sein kann. Durch den Zusatzbehälter 10 bilden sich zwei Druckräume 2 und 16 aus, welche über die Drosselöffnung 14 miteinander verbunden sind.

Im Bereich oberhalb der Ausströmöffnung 11 ist eine Zündvorrichtung angeordnet, welche zur Zerstörung der Membran 5 dient und im wesentlichen aus einer Zündpille 8 und einer Düsenkammer 7 besteht. Alternativ dazu kann die Zündpille auch quer zur Ausströmrichtung angeordnet sein, wobei die Düsenkammer 7 in diesem Fall einen 90° Winkel aufweist, um den gebündelten Heißgasstrom auf die Membran 5 zu leiten.

Zündvorrichtung und Gasdruckbehälter 1 sind über eine Öffnungen 15 aufweisende Hülse 3 miteinander fix verbunden.

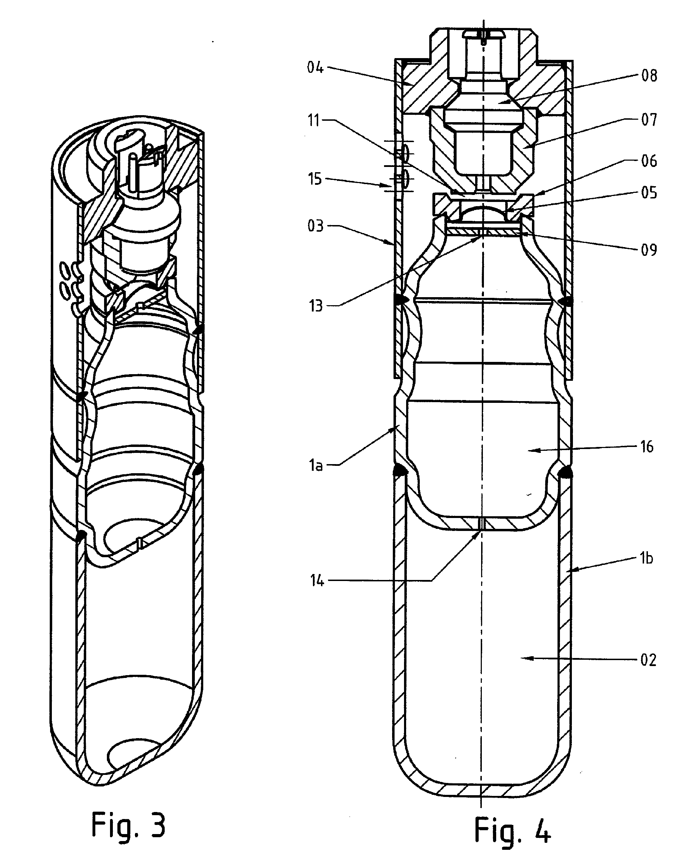

Fig.3 und 4 zeigen ebenfalls einen erfindungsgemäßen Gasdruckbehälter 1. Dieser besteht aus zwei separaten Behältern 1a und 1b, welche miteinander verschweisst sind. Beide Behälter 1a und 1b sind über eine in einem Behälter 1a angeordnete Drosselöffnung 14 miteinander verbunden. Durch die beiden separaten Behälter 1a, 1b sind wiederum zwei Druckräume 2, 16 ausgebildet. Auch in diesem Ausführungsbeispiel ist unmittelbar vor der Ausströmöffnung 11 eine eine Drosselöffnung 13 aufweisende Lochblende 9 angeordnet.

Der restliche Aufbau der Vorrichtung zur Befüllung eines Airbags ist identisch jenem aus Fig. 1 und 2.

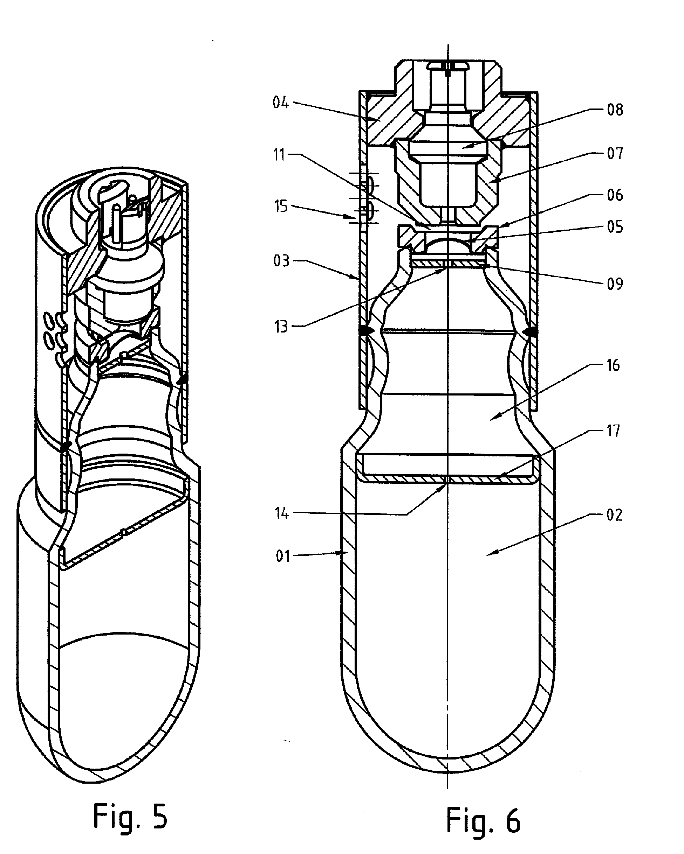

Fig.5 und 6 zeigen eine weitere Ausführungsvariante eines erfindungsgemäßen Gasdruckbehälters 1 bei einer Vorrichtung zur Befüllung eines Airbags. Im Gasdruckbehälter 1 ist ungefähr mittig eine eine Drosselöffnung 14 aufweisende Lochblende 17 angeordnet. Die Lochblende 17 teilt den Gasdruckbehälter wiederum in 2 Druckkammern 2,16. Unmittelbar vor der Ausströmöffnung 11 ist eine weitere eine Drosselöffnung 13 aufweisende Lochblende 9 angeordnet. Der restliche Aufbau der Vorrichtung zur Befüllung eines Airbags ist identisch jenem aus Fig. 1 und 2.

Soll der Airbag aufgeblasen werden, wird zuerst die Zündpille 8 durch Anlegen eines elektrischen Zündimpulses gezündet. Die Energiefreisetzung wird in der Düsenkammer 7 gebündelt und auf die Membran 5 geleitet, welche die Ausströmöffnung 11 verschließt. Durch die partielle Erhitzung der Membran 5 durch den gebündelten Heißgasstrom, wird diese zerstört und die Ausströmöffnung 11 freigegeben.

Durch die beiden, der Ausströmöffnung 11 vorgelagerten Drosselöffnungen 13,14 kann das Ausströmverhalten des Gases in einem weiten Bereich gesteuert werden, da ein zweistufiger Massenstrom erzielt wird. Dieser kann entsprechend dem gewünschten Ausströmverhalten eingestellt werden, wobei als Parameter die Durchmesser der Drosselöffnungen 13,14 sowie das Verhältnis der beiden Druckraumvolumina 2,16 variierbar sind.

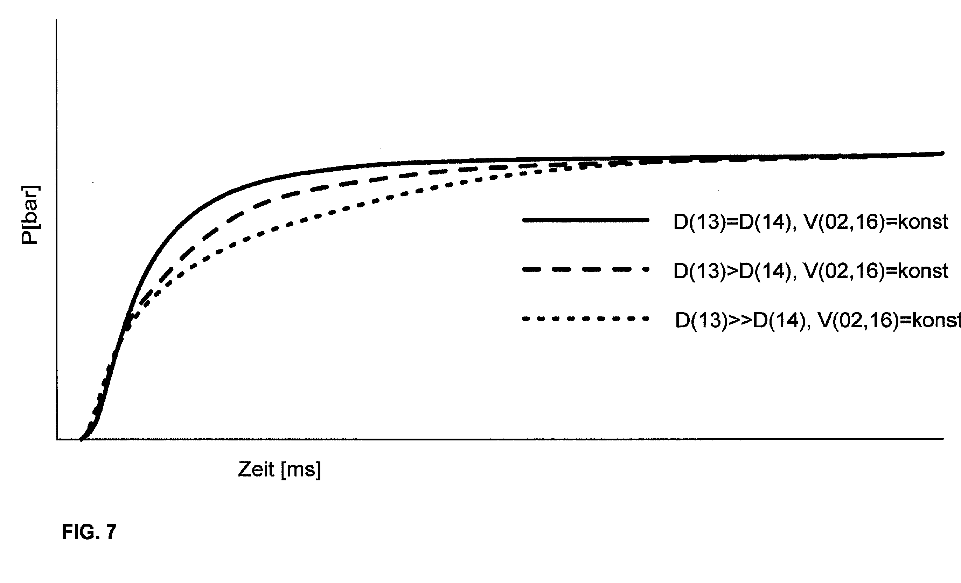

Fig. 7 zeigt einen diesen Umstand aufzeigendes Druck-Zeit Diagramm. Sehr deutlich ist erkennbar, dass bei größerer Differenz der Durchmesser der beiden Drosselöffnungen 13,14, die Ausströmkurve flacher wird. Druckstöße, die den Airbag beschädigen könnten, können so wirkungsvoll verhindert werden. Weiters kann damit der OOP (out of position) Problematik bei Insassen entsprechend Rechnung getragen werden.

Die erste Stufe mit höherem Massenstrom dient zum Öffnen des Airbags und wird durch das Volumen der Druckkammer 16 definiert. Die zweite Stufe mit reduziertem Massenstrom ergibt sich aus dem Differenzvolumen zwischen Druckkammer 2 und 16, sowie der Drosselöffnung 14.

## Patentansprüche

1. Gasdruckbehälter (1) zum Aufblasen eines Gassacks mit einer in den Gassack mündenden Füllöffnung (15) und einer in Strömungsrichtung gesehen davor angeordneten Ausströmöffnung (11), welche im Ruhezustand mittels eines über eine Auslösevorrichtung (7,8) zerstörbaren Dichtelements (5) verschlossenen ist und mit zumindest zwei Druckräumen (2,16) die vor der Ausströmöffnung angeordnet und ausschließlich mit Gas gefüllt sind, **dadurch gekennzeichnet, dass** in Strömungsrichtung gesehen vor der Ausströmöffnung (11) mindestens zwei Drosselöffnungen (13,14) mit kleinerem Durchmesser als die Ausströmöffnung (11) angeordnet sind, wobei die Durchmesser der Drosselöffnungen (13,14) mit zunehmendem Abstand von der Ausströmöffnung (11) kleiner werden.

2. Gasdruckbehälter (1) nach Anspruch 1, **dadurch gekennzeichnet, dass** die mindestens zwei Druckräume (2,16) über die erste Drosselöffnung (14) miteinander verbunden sind und der in die Ausströmöffnung (11) mündende Druckraum (16) mit der Ausströmöffnung (11) über die zweite Drosselöffnung (13) verbunden ist.

3. Gasdruckbehälter (1) nach Anspruch 2, **dadurch gekennzeichnet**, das die zwei Druckräume (2,16) durch einen in den Gasdruckbehälter (1) eingehängten Zusatzbehälter (10) gebildet sind.

4. Gasdruckbehälter (1) nach Anspruch 3, **dadurch gekennzeichnet**, das der Zusatzbehälter (10) im Bereich der Ausströmöffnung (11) in den Gasdruckbehälter (1) eingehängt ist.

5. Gasdruckbehälter (1) nach Anspruch 2, **dadurch gekennzeichnet**, das die zwei Druckräume (2,16) durch zwei miteinander fix verbundene, vorzugsweise verschweißte Behälter (1a, 1b) gebildet sind.

6. Gasdruckbehälter (1) nach Anspruch 2, **dadurch gekennzeichnet**, das die zwei Druckräume (2,16) durch eine den Gasdruckbehälter (1) in zwei Volumsbereiche trennende Lochplatte (17) gebildet sind.

7. Gasdruckbehälter (1) nach einem der Ansprüche 1 bis 6, **dadurch gekennzeichnet, dass** das Dichtelement (5) eine Membran ist.

8. Gasdruckbehälter (1) nach einem der Ansprüche 1 bis 7, **dadurch gekennzeichnet, dass** die Auslösevorrichtung (7,8) eine mittels eines elektrischen Zündimpulses gezündete Zündpille ist.
